**Europäisches Patentamt**

**European Patent Office**

**Office européen des brevets**

(11) Veröffentlichungsnummer: **0 150 789**
**B1**

(12) ## EUROPÄISCHE PATENTSCHRIFT

(45) Veröffentlichungstag der Patentschrift:
31.05.89

(21) Anmeldenummer: **85100571.0**

(22) Anmeldetag: **21.01.85**

(51) Int. Cl.⁴: **C 08 G 18/40,** C 08 G 18/70,
C 08 L 75/02

(54) **Verfahren zur Herstellung von Polyharnstoff-Elastomeren und entsprechende Elastomere idealisierten Segmentaufbaus.**

(30) Priorität: **02.02.84 DE 3403498**

(43) Veröffentlichungstag der Anmeldung:
**07.08.85 Patentblatt 85/32**

(45) Bekanntmachung des Hinweises auf die Patenterteilung:
**31.05.89 Patentblatt 89/22**

(84) Benannte Vertragsstaaten:
**BE DE FR GB IT NL**

(56) Entgegenhaltungen:
**EP-A-0 074 023**
**EP-A-0 084 141**
**EP-A-0 103 323**

(73) Patentinhaber: **BAYER AG, D-5090 Leverkusen 1**
**Bayerwerk (DE)**

(72) Erfinder: **Grögler, Gerhard, Dr., von Diergardt-**
**Strasse 48, D-5090 Leverkusen (DE)**
Erfinder: **Hess, Heinrich, Dr., Körnerstrasse 5,**
**D-5090 Leverkusen (DE)**
Erfinder: **Kopp, Richard, Dr., Wolfskaul 12, D-5000**
**Köln 80 (DE)**
Erfinder: **Rasshofer, Werner, Dr., Wolfskaul 10,**
**D-5000 Köln 80 (DE)**

EP 0 150 789 B1

LIBER, STOCKHOLM 1989

**Beschreibung**

Gegenstand der Erfindung sind ein Verfahren zur Herstellung von Polyharnstoff-Elastomeren mit nahezu ideal segregierten Hart- und Weichsegmenten, sowie die nach diesem Verfahren hergestellten Produkte.

Erfindungsgemäß vermischt man aromatische Polyamine mit Molekulargewichten von 400 bis 8000, vorzugsweise 600 bis 4000, in Mengen die einem $NCO/NH_2$-Äquivalentverhältnis von 1 : 1 bis 1,5 : 1 entsprechen, mit niedermolekularen, festen, feinteiligen Diisocyanaten mit Schmelzpunkten > 40°C, vorzugsweise > 80°C, und von möglichst symmetrischem oder starrem Aufbau, z. B. Phenylendiisocyanat, Naphthylen-1,5-diisocyanat, dimerem Toluylen-2,4-diisocyanat oder dem Harnstoffdiisocyanat des Toluylen-2,4-diisocyanats, und erhitzt diese Mischung, welche eine hinreichende Topfzeit von mindestens einigen Minuten aufweist, nach Eingießen in eine Form auf höhere Temperaturen, z. B. 100 bis 140°C.

Die erhaltenen Produkte zeigen ausgezeichnete elastische Eigenschaften über einen weiten Temperaturbereich hinweg, d.h. einen nahezu waagerechten Verlauf der Schubmodulkurve (G') im Torsionsschwingungsversuch; dies bedeutet, daß die Hart- und Weichsegmente deutlich segregiert sind und einander nicht wesentlich durch gegenseitige Wechselwirkung unter "Erweichung" stören.

Polyurethanelastomere sind zu einer technisch bedeutsamen Gruppe innerhalb der organischen Polymerwerkstoffe herangewachsen. Sie zeichnen sich im allgemeinen durch ein hohes Festigkeitsniveau, die Kombination hoher Härte mit hoher Bruchdehnung sowie normalerweise hohen Verschleißwiderstand aus.

Ausgehend von mannigfaltigen niedermolekularen bzw. höhermolekularen Reaktanden ist eine außerordentliche Vielzahl struktureller Variationen mit einer entsprechenden Vielfalt der resultierenden Werkstoffeigenschaften möglich.

Zur Herstellung von Polyurethan-Polyharnstoff-Elastomeren aus reaktiven Ausgangsverbindungen wird üblicherweise das Gießverfahren angewendet. Hierbei bieten sich zwei verfahrenstechnische Möglichkeiten an, die sich durch die Reihenfolge der Zugabe der Reaktionspartner unterscheiden.

Nach dem one-shot-Verfahren werden alle Komponenten nach gravimetrischer oder volumetrischer Dosierung gleichzeitig gemischt und dann in Formen gefüllt. Die chemischen Reaktionen starten also gleichzeitig, sie differenzieren sich jedoch innerhalb gewisser Grenzen infolge unterschiedlicher Reaktivität der Komponenten (bzw. durch entsprechende Katalyse). Die NCO-Reaktionen verlaufen exotherm. Da beim one-shot-Verfahren eine stufenweise Abführung der entstehenden Wärme nicht möglich ist, können bei dieser Reaktionsführung leicht zusätzliche Komplikationen auftreten, z. B. Inhomogenität im Gießling infolge zeitweise unterschiedlicher Temperaturen zwischen Randphase und Kern, Blasen- oder Rißbildung durch Überhitzung im Inneren, ungenügende Bindung von Hart- und Weichsegment durch stark unterschiedliche Reaktivitäten einzelner Komponenten, verstärkte Nebenreaktionen wie Isocyanuratbildung, Carbodiimidbildung etc.

Vor allem kann man beim one-shot-Verfahren nicht erwarten, daß ein geordneter chemischer Aufbau des Weich- und Hartsegments auftritt. Es werden Weichsegmenteinheiten mit unterschiedlicher Zahl von isocyanatverknüpften höhermolekularen Reaktanden und ebenso Hartsegmenteinheiten mit unterschiedlicher Zahl von isocyanatverknüpften Kettenverlängerern gebildet.

Es ist deshalb verständlich, daß als erstes die stufenweise Reaktionsführung, die sogenannte Prepolymertechnik, bei den kommerzialisierten PUR-Gießsystemen, Anwendung fand, da hierbei nahezu zwangsläufig ein separater Aufbau von harten und weichen Sequenzen im entstehenden PUR-Polymer-Molekül erfolgt.

Im allgemeinen wird zunächst die langkettige Diolkomponente (Polyester, Polyether) partiell oder ganz mit dem Diisocyanat umgesetzt, wobei je nach den gewählten molaren Verhältnissen der Ausgangskomponenten ein OH- oder NCO-terminiertes Prepolymer entsteht. Oligomere Prepolymere mit OH-Endgruppen sind im allgemeinen wegen ihrer sehr hohen Viskositäten nicht geeignet für die Gießverarbeitung, finden aber begrenzte Verwendung bei den Urethan-Katuschuken. Viele Gießsysteme basieren dagegen auf Prepolymeren, die größere, aber definierte Mengen an überschüssigen Diisocyanaten enthalten (Semiprepolymer, Voraddukt). Dieses Reaktionsprodukt der ersten Umsetzungsstufe wird entweder beim Endverbraucher selbst, und zwar kurzfristig vor der Weiterverarbeitung, hergestellt, oder es gelangt bereits in dieser Form vom Rohstoffproduzenten zur Auslieferung. In diesem Falle muß eine Lagerstabilität von mehreren Monaten vorausgesetzt werden. Prepolymere aus möglichst exakt 2 Mol eines Diisocyanates und einem Mol eines langkettigen Polyols werden häufig bei der Vernetzung mit sperrigen aromatischen Diaminen eingesetzt. Sie haben gegenüber Semiprepolymeren den physiologischen Vorteil, keine flüchtigen monomeren Diisocyanate zu enthalten. Aus arbeitshygienischer Sicht ist beim Gießen von Artikeln in offenen Formen hierauf besonders zu achten.

Das NCO/OH-Verhältnis der Ausgangskomponenten liegt bei allen Gießsystemen oberhalb von 1 (bis etwa 1,15), d.h. bei der Reaktion des Prepolymeren mit Glykolen finden einige NCO-Gruppen keinen OH-Partner. Sie reagieren dann mit den gebildeten Urethangruppen sowie teilweise auch mit der Luftfeuchtigkeit unter chemischer Vernetzung. Die physikalische Vernetzung (teilkristalline Hartsegmentassoziation über Wasserstoff-Brückenbildung) wird gegebenenfalls durch eine Allophanat- oder Biuret-Bildung chemisch ergänzt. Die chemische Vernetzung findet dabei praktisch in der festen Phase statt und ist der Grund dafür, daß fast alle Glykol-vernetzten Systeme eine Nachtemperung erfordern. Dies ist zur Erreichung der optimalen Werkstoffeigenschaften notwendig. Die Summe aus der chemischen und physikalischen Vernetzung führt zu optimalen Werkstoffeigenschaften. Wegen der stärkeren Polarität der Harnstoffgruppen gegenüber

2

Urethangruppen segregrieren bei aminvernetzten Systemen die Hartsegmente schneller. Aminvernetzte Produkte benötigen deshalb eine kürzere Nachheizung. Verarbeitungstemperatur und Kennzahl haben bei der Aminvernetzung einen größeren Einfluß auf die Eigenschaften als bei der Glykolvernetzung.

Nur beim Einsatz von Prepolymeren aus 2 Mol eines Diisocyanates und einem Mol eines langkettigen Polyols (Polyether, Polyester) und deren Umsetzung mit einem Mol eines Kettenverlängerers (Diol, aromatisches Diamin) sind Polyurethan/Polyharnstoffelastomere mit einem annähernd exakten chemischen Aufbau des Hart- und Weichsegmentes zu erwarten. Trotz des scheinbar stöchiometrischen Aufbaus besitzen aber auch derartige 2 : 1-NCO-Prepolymere eine "Flory"-Verteilung, d.h. neben (beachtlichen) Mengen an freien Diisocyanaten entsprechende Mengen an ein- oder mehrfach über Diisocyanate verknüpfte NCO-Prepolymermolekülen.

Setzt man derartige NCO-Prepolymer (mischungen) mit Kettenverlängerungsmitteln um, so bilden sich nochmals verbreitete Verteilungen von Hartsegmenten, indem gegebenenfalls mehrere Diisocyanate über mehrere Diamine verknüpft werden oder mehrere NCO-Prepolymere über Diamine verbunden sind.

In der Praxis erreicht man bei dieser Verfahrensweise mit Diolen meist nur Produkte ungenügender Qualität, so daß Diole u.a. mit sogenannten Semiprepolymeren umgesetzt werden, die noch zusätzlich zum NCO-Prepolymer eine definierte Menge an freiem Diisocyanat enthalten und somit die Bildung eines genügenden Hartsegmentanteils gestatten. Bei der Verwendung von 2 : 1-Prepolymeren werden deshalb vorzugsweise aromatische Diamine als Kettenverlängerer bzw. Vernetzer eingesetzt.

Die Einbringung und homogene Verteilung des Vernetzers in das Prepolymere eines PUR-Heißgießsystems und das Einfüllen der Reaktionsmasse in fast immer offene und beheizte Gießformen müssen zwei unmittelbar aufeinander folgende Arbeitsschritte sein, weil die zur Verfügung stehende Zeit je nach System maximal wenige Minuten, in einigen Fällen sogar nur Sekunden beträgt. Die rasch fortschreitende Reaktion verursacht eine starke Zunahme der Viskosität und führt zu einer baldigen Verfestigung der Masse, die allerdings zur Erreichung der endgültigen physikalischen Eigenschaften meistens einer Nachheizung bedarf.

In der Praxis wird das Einrühren des Vernetzers und das Füllen der Formen entweder diskontinuierlich im Handverfahren durchgeführt oder man verwendet kontinuierlich arbeitende Mehrkomponentengießmaschinen. Auch eine intermittierende Verarbeitung von Heißgießsystemen, verbunden mit einer schußweisen Formfüllung, ist möglich.

Das Einbringen und Vermischen des Vernetzers, und das Einfüllen der Reaktionsmasse in die Gießform sind beim Einsatz von aromatischen Diaminen wegen deren inhärent hoher Reaktivität gegenüber Isocyanaten besonders problematisch. Es hat daher nicht an Bemühungen gefehlt, die Reaktivität der aromtischen Amine durch geeignete Modifizierungen zu verringern, wie z. B. durch Kernsubstitution mit sperrigen und/oder stark elektronenziehenden Gruppen (DE-A-3 012 864) oder die Verwendung von aromatischen Amin/Salzkomplexen (US-A-3 891 606). Aber alle diese Verfahren sind mit Nachteilen behaftet, wie z. B. dem hohen Preis der mit Carbonsäureester- oder Sulfonamidgruppen substituierten aromatischen Diamine.

Es wurden auch bereits Verfahren beschrieben, bei denen ein feingemahlenes aromatisbhes Diamin in einer Polyhydroxylverbindung suspendiert und dann mit einem Polyisocyanat bzw. einem Isocyanatgruppen aufweisendem Präpolymeren bei einer unterhalb des Schmelzpunktes des Diamins liegenden Temperatur vermischt und die Masse bei Temperaturen unterhalb des Schmelzpunktes des Diamins (DE-OS-2 635 400) oder oberhalb des Schmelzpunktes des Diamins (DE-AS-1 122 699) ausgehärtet wird.

Diese sogenannten "heterogenen" Verfahren, bei denen die als Kettenverlängerer eingesetzten Diamine in heterogener Phase umgesetzt werden können, gestatten zwar längere Verarbeitungszeiten, es bleiben jedoch toxikologische Bedenken bestehen. Außerdem werden die Diamine vorzugsweise in Polyhydroxylverbindungen suspendiert eingesetzt, so daß eine saubere Reaktionsführung gestört wird, da die Reaktionsgeschwindigkeiten der beiden Komponenten mit NCO-Gruppen sehr unterschiedlich sind.

Es wurde nun überraschenderweise gefunden, daß diese Probleme umgangen werden können und Polyharnstoff-Elastomere mit nahezu idealem 1 : 1 Hart- und Weichsegmentaufbau hergestellt werden können, wenn niedermolekulare, feste, feinteilige Diisocyanate mit höhermolekularen aromatischen oder aliphatischen Diaminen im Molverhältnis von annähernd 1 : 1 umgesetzt werden. Die festen, feinteiligen Polyisocyanate lassen dabei auch eine hinreichend lange Topfzeit zu.

Die ideale Hart-/Weichsegmentverteilung in segmentierten Elastomeren wird von R. Bonart in der Angewandten Makromolekularen Chemie, 58/59 (1977), 259 (Nr. 849) definiert.

Gegenstand der Erfindung ist somit ein Verfahren zur Herstellung von Polyharnstoff-Elastomeren mit nahezu idealem Hart- und Weichsegmentaufbau, welches dadurch gekennzeichnet ist, daß man aromatische Polyamine mit Molekulargewichten von 400 bis 8000, vorzugsweise 600 bis 4000, in einem NCO-NH$_2$-Äquivalentverhältnis von 1 : 1 bis 1,5 : 1 mit niedermolekularen, festen, feinteiligen Diisocyanaten mit Schmelzpunkten) > 40°C und einer Teilchengröße ≤ 200 μm, vorzugsweise aromatischen Diisocyanaten mit symmetrischem starrem Molekülaufbau und Schmelzpunkten oberhalb 80°C, versetzt und diese Mischung nach Eingießen in Formen auf höhere Temperatur, z. B. 100 bis 200°C, vorzugsweise 100 bis 160°C, erhitzt (ausgenommen sind dabei solche feinteiligen Diisocyanate, die eine durch Raktion von 0,1 - 25 % ihrer NCO-Gruppen mit aliphatisch gebundene primäre und/oder sekundäre Aminogruppen und/oder Hydrazidgruppen enthaltenden Verbindungen und/oder Hydrazin(en) gebildete Polyadduktumhüllung aufweisen). Gegenstand der Erfindung sind ferner die nach diesem Verfahren hergestellten Elastomeren mit ausgezeichneten elastischen Eigenschaften über einen weiten Temperaturbereich, d.h. einem praktisch waagerechten Verlauf der Schubmodulkurve (G') im Torsionsschwingungsversuch. Die Hart- und Weichsegmente der Elastomeren sind deutlich segregiert und stören einander nicht wesentlich durch gegenseitige Wechselwirkungen. Bei Verwendung von Diisocyanaten mit starrem Molekülaufbau und hohen Schmelzpunkten entstehen so auch ohne Mitverwendung von Kettenverlängerungsmitteln hochelastische Produkte mit guten Eigenschaften. Bei Mitverwendung von aromatischen Diaminen als Ketten-Verlängerungsmittel können die Elastizität und Härte, sowie das Erweichungsverhalten noch verbessert werden. Es ist daher auch Gegenstand der Erfindung, gegebenenfalls zusätzlich zu den höhermolekularen Polyaminen niedermolekulare aromatische Polyamine, vorzugsweise aromatische Diamine, beim Elastomeraufbau mitzuverwenden.

Als Ausgangskomponenten für das erfindungsgemäße Verfahren werden folgende Verbindungen eingesetzt:

**Diisocyanate:**

Als Diisocyanate werden feste, feinteilige Diisocyanate eingesetzt, deren Schmelzpunkt oberhalb 40°C, vorzugsweise oberhalb 80°C liegt.

Es können dies aliphatische, cycloaliphatische, araliphatische, bevorzugt aber aromatische und heterocyclische Diisocyanate sein, weiterhin perchlorierte Aryldiisocyanate, Carbodiimidgruppen aufweisende Diisocyanate, Allophanatgruppen aufweisende Diisocyanate, Isocyanuratgruppen aufweisende Diisocyanate, Urethan- oder Harnstoffgruppen aufweisende Diisocyanate, acylierte Harnstoffgruppen aufweisende Diisocyanate, Biuretgruppen aufweisende Diisocyanate, durch Telomerisationsreaktion hergestellte Diisocyanate, Estergruppen aufweisende Diisocyanate. Bevorzugt werden Uretdiongruppen aufweisende Diisocyanate und Harnstoffgruppen aufweisende Diisocyanate. Als Beispiele für die einsetzbaren Polyisocyanate seien genannt:

| | | | |
|---|---|---|---|
| p-Xylylendiisocyanat | Fp.: | 45 - | 46°C |
| p-Tetramethylxylylendiisocyanat | | | 72°C |
| 1,5-Diisocyanatomethylnaphthalin | | 88 - | 89°C |
| 1,3-Phenylendiisocyanat | | | 51°C |
| 1,4-Phenylendiisocyanat | | 94 - | 96°C |
| 1-Methylbenzol-2,5-diisocyanat | | | 39°C |
| 1,3-Dimethylbenzol-4,6-diisocyanat | | 70 - | 71°C |
| 1,4-Dimethylbenzol-2,5-diisocyanat | | | 76°C |
| 1-Nitrobenzol-2,5-diisocyanat | | 59 - | 61°C |
| 1,4-Dichlorbenzol-2,5-diisocyanat | | 134 - | 137°C |
| 1-Methoxybenzol-2,4-diisocyanat | | | 75°C |
| 1-Methoxybenzol-2,5-diisocyanat | | | 89°C |
| 1,3-Dimethoxybenzol-4,6-diisocyanat | | | 125°C |
| Azobenzol-4,4'-diisocyanat | | 158 - | 161°C |
| Diphenylether-4,4'-diisocyanat | | 66 - | 68°C |
| Diphenylmethan-4,4'-diisocyanat | | | 42°C |
| Diphenyl-dimethylmethan-4,4'-diisocyanat | | | 92°C |
| Naphthalin-1,5-diisocyanat | | 130 - | 132°C |
| 3,3'-Dimethylbiphenyl-4,4'-diisocyanat | | 68 - | 69°C |
| Diphenyldisulfid-4,4'-diisocyanat | | 58 - | 60°C |
| Diphenylsulfon-4,4'-diisocyanat | | | 154°C |
| 4,4'-Diisocyanato-(1,2)-diphenyl-ethan | | 88 - | 90°C |
| dimeres 1-Methyl-2,4-phenylendiisocyanat | | | 156°C |
| dimeres 1-Isopropyl-2,4-phenylendiisocyanat | | | 125°C |
| dimeres 1-Chlor-2,4-phenylendiisocyanat | | | 177°C |
| dimeres 2,4'-Diisocyanato-diphenylsulfid | | 178 - | 180°C |
| dimeres Diphenylmethan-4,4'-diisocyanat | | | |
| 3,3'-Diisocyanato-4,4'-dimethyl-N,N'-diphenylharnstoff | | | |
| N,N'-Bis[4(4-Isocyanatophenylmethyl)phenyl]harnstoff | | | |
| N,N'-Bis[4(2-Isocyanatophenylmethyl)phenyl]harnstoff | | | |

Erfindungsgemäß werden besonders bevorzugt 1,5-Naphthalin-diisocyanat, 3,3'-Diisocyanato-4,4'-dimethyl-N,N'-diphenylharnstoff, dimeres 1-Methyl-2,4-diisocyanato-benzol, dimeres 4,4'-Diisocyanato-diphenylmethan und 3,3'-Dimethyl-4,4'-(bzw. 2,2'-diisocyanato-diphenyl) eingesetzt.

Es können in geringen Anteilen auch Triisocyanate wie z. B.

| | | |
|---|---|---|
| 1-Methylbenzol-2,4,6-triisocyanat | Fp.: | 75°C |
| 1,3,5-Trimethylbenzol-2,4,6-triisocyanat | | 93°C |

oder

| | |
|---|---|
| Triphenylmethan-4,4',4''-triisocyanat | 89 - 90°C |

miteingesetzt werden.

Wesentlich für das erfindungsgemäße Verfahren ist, daß die festen Diisocyanate in einer mittleren Teilchengröße $\leqslant$ 200 μm, z. B. 1 bis 200 μm, vorliegen. Besonders bevorzugt wird eine mittlere Teilchengröße von $\leqslant$ 30 μm, bevorzugt 1 - 30 μm.

**Höhermolekulare Polyaminoverbindungen**

Als höhermolekulare Polyaminoverbindungen mit aromatischen Aminogruppen und einem Molekulargewichtsbereich von 400 bis 8000, vorzugsweise 600 bis 4000, werden insbesondere solche Polyaminoverbindungen eingesetzt, wie sie durch Hydrolyse von entsprechenden NCO-Prepolymeren auf der Basis von höhermolekularen Dihydroxylverbindungen (z. B. Polyester- und/oder Polyetherdiolen) und überschüssigen aromatischen Diisocyanaten, insbesondere Toluylen-2,4-diisocyanat, durch (vorzugsweise basische) Hydrolyse hergestellt werden können. Beispiele für dieses Verfahren werden in der DE-OS-2 948 419, DE-OS-3 039 600, DE-OS-3 112 118, der EP-A-61 627, EP-A-71 132, EP-A-71 139 und EP-A-97 869 angegeben. In der erstgenannten Patentschrift werden auch weitere Verfahren des Standes der Technik zur Herstellung von aromatischen Aminoverbindungen höhermolekularer Struktur genannt, wie sie für das erfindungsgemäße Verfahren geeignet sind. Es handelt sich bei den Verfahrensprodukten nach DE-OS-2 948 419 und den anderen zitierten Druckschiften vorzugsweise um Polyether-Diamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an Stelle der früheren Isocyanatgruppen tragen. Die höhermolekularen Diamine können jedoch auch nach anderen Verfahren, z. B. durch Umsetzung von NCO-Prepolymeren mit überschüssigen Mengen an Aminophenylethylamin oder anderen Diaminen entsprechend DE-AS-1 694 152 hergestellt werden; eine andere Synthesemöglichkeit beschreibt die FR-PS-1 415 317 durch Oberführung der NCO-Prepolymere mit Ameisensäure in die N-Formylderivate und deren Verseifung. Auch die Umsetzung von NCO-Prepolymeren mit Sulfaminsäure gemäß DE-AS-1 155 907 führt zu höhermolekularen Polyaminen.

Die höhermolekularen Polyamine besitzen Molekulargewichte von etwa 400 bis 8000, vorzugsweise 600 bis 4000 und besonders bevorzugt von 1000 bis 3000.

Die höhermolekularen Polyamine können von ihrer Herstellung her (z. B. aus aromatischen NCO-Prepolymeren durch Alkalihydrolyse) noch Urethangruppen enthalten, so daß es sich dann bei den erfindungsgemäßen Verfahrensprodukten um Polyurethanharnstoffe handelt, doch sind diese Urethanbindungen nur von untergeordneter Bedeutung.

Es können zur Herstellung der Polyharnstoff-Elastomeren nach dem erfindungsgemäßen Verfahren anteilmäßig (vorzugsweise < 5 Mol-% der difunktionellen Amine) auch tri- und höherfunktionelle höhermolekulare Polyamine eingesetzt werden, die nach dem gleichen Verfahren wie die Diamine zugänglich sind.

Ferner können die höhermolekularen Polyamine mit unterschüssigen Mengen an Diisocyanaten, vorzugsweise Toluylendiisocyanat, zu längerkettigen höhermolekularen Polyaminen verknüpft werden.

Wegen der hohen Reaktivität der aromatischen und aliphatischen höhermolekularen Polyamine gegenüber Isocyanaten kann auf eine Katalyse der Reaktion im allgemeinen verzichtet werden.

Gegebenenfalls können neben den höhermolekularen Polyaminen aromatische Diamine des Molekularbereichs 108 bis 399 eingesetzt werden.

Unter aromatischen Diaminen sollen auch solche Amine verstanden werden, welche die Aminogruppe an heterocyclische Reste mit aromatischem Charakter gebunden enthalten. Als aromatische Diamine sind z. B. geeignet: p-Phenylendiamin, 2,4-/2,6-Toluylendiamine, Diphenylmethan-4,4'-und/oder -2,4'- und/oder -2,2'-diamine, 3,3'-Dichlor-4,4'-diaminodiphenylmethan, 3-($C_1$-$C_8$)-Alkyl-4,4'-diaminodiphenylmethane, die 3,3'-Di-($C_1$-$C_4$)-4,4'-diaminodiphenylmethane sowie die 3,3',5,5'-Tetra-($C_1$-$C_4$)-alkyl-4,4'-diphenylmethane, die 4,4'-Diaminodiphenyl-sulfide, -sulfoxide oder -sulfone, Ethergruppen aufweisende Diamine gemäß DE-A-1 770 525 und 1 809 172 (US-PS-3 654 364 und 3 736 295), gegebenenfalls in 5-Stellung substituierte 2-Halogen-1,3-phenylendiamine (DE-A-2 001 772, 2 025 896 und 2 065 869), Bisanthranilsäureester (DE-A-2 040 644 und 2 160 590), 2,4-Diamino-benzoesäureester nach DE-A-2 025 900, sowie durch eine, zwei oder drei ($C_1$-$C_4$)-Alkylgruppen substituierte Toluylendiamine. Die Menge an niedermolekularen Diaminen beträgt 0,05 bis 5,0 Mol, vorzugsweise 0,1 bis 1,5 Mol pro Mol höhermolekulares Diamin. Besonders bevorzugt sind 3,5-Diethyl-, -2,4-//2,6-Toluylen-diamine.

3. Weitere Zusatzmittel

Als gegebenenfalls einzusetzende Hilfs- und Zusatzstoffe seien genannt: Farbstoffe oder Pigmente, Füllstoffe wie Silicagel, Gips, Talkum, Aktivkohle, Metallpulver, UV-Absorptionsmittel oder Stabilisatoren wie phenolische Antioxidantien, Lichtschutzmittel, Treibmittel, Weichmacher, oberflächenaktive Zusatzstoffe wie Emulgatoren oder Schaumstabilisatoren, gegebenenfalls Zellregler, Antiblockmittel, Silikone, Flammschutzmittel, oder fungistatisch und/oder bakteriostatisch wirkende Substanzen.

Als Füllstoffe sind z. B. Fasermaterialien, d.h. alle an sich bekannten anorganischen und/oder organischen, faserförmigen Verstärkungsmaterialien einsetzbar, z. B. Glasfasern, vorzugsweise in Längen zwischen 2 und 60 mm, Graphitfasern und Asbestfasern oder Fasermaterialien, die von einem organischen Polymeren stammen, z. B. von einem Polyester wie Polyethylenterephthalat, oder vorzugsweise aromatischen Polyamiden, wie dem m-

5

Phenylen/Isophthalsäurepolyamid, oder dem Poly-p-phenylen-terephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Das Verhältnis von NCO-Äquivalenten aus dem feinteiligen, festen Diisocyanat zu den $NH_2$-Äquivalenten aus den höhermolekularen Di- bzw. Polyaminen und gegebenenfalls niedermolekularen aromatischen Diaminen beträgt 1 : 1 bis 1,5 : 1, bevrgzugt wird ein NCO/$NH_2$-Äquivalentverhältnis von 1 : 1 bis 1,35 : 1, besonders von 1: 1 bis 1,25 : 1; Produkte höchsten Molekulargewichts entstehen zumeist bei NCO/$NH_2$-Verhältnissen von etwa 1 oder etwas darüber.

Zur Durchführung des erfindungsgemäßen Verfahrens wird zunächst das feinteilige, feste Diisocyanat von Hand oder mit Hilfe eines geeigneten Rührwerks mit dem höhermolekularen Polyamin bzw. dessen Gemisch mit niedermolekularen aromatischen Diaminen vermischt. Je nach Art der eingesetzten Komponenten liegt die Verarbeitungszeit (sogenannte Topfzeit) dieser Mischungen bei einigen Minuten bis in besonderen Fällen zu einigen Stunden. Es ist somit eine ausreichende Verarbeitungszeit der Mischung gewährleistet, wenn auch diese Mischungen nicht über Wochen oder Monate lagerstabil sind.

Sollen blasenfreie Elastomerteile erhalten werden, so wird das Isocyanat/Amin-Gemisch, solange es noch rührbar ist, unter Rühren im Vakuum entgast. Dann wird das Gemisch in eine geeignete Form gegossen und in der Form, die z. B. direkt beheizt sein kann oder in einen üblichen Wärmeschrank gestellt wird, ausgeheizt. Dieses Ausheizen erfolgt zumeist bei Temperaturen von 100 bis 200°C. Bevorzugt sind Ausheiztemperaturen von 100 bis 160°C, besonders bevorzugt von 120 bis 130°C.

Durch Versuchsreihen kann die optimale Ausheizdauer und Ausheiztemperatur ermittelt werden. Sie liegt je nach Ausheiztemperatur in der Größenordnung von einigen Minuten bis zu ca. 8 Stunden.

Nach dem erfindungsgemäßen Verfahren werden hochwertige, weitgehend linear aufgebaute Polyurethan/Polyharnstoff-Elastomere mit hoher thermomechanischer Stabilität erhalten. Die thermomechanische Stabilität eines segmentierten Polyurethans ist um so höher,

a) je höher der Erweichungs- und Schmelzbereich der Hartsegmentphase
b) je vollständiger die Abscheidung der Hartsegmentkomponente aus der Weichsegmentmatrix ist.

Als Konsequenz hieraus ist der gummielastische Zustandsbereich um so ausgedehnter,

c) je perfekter die Bedingungen nach a) und b) erfüllt sind und je niedriger die Glasumwandlungstemperatur Tg der Weichsegmentphase liegt.

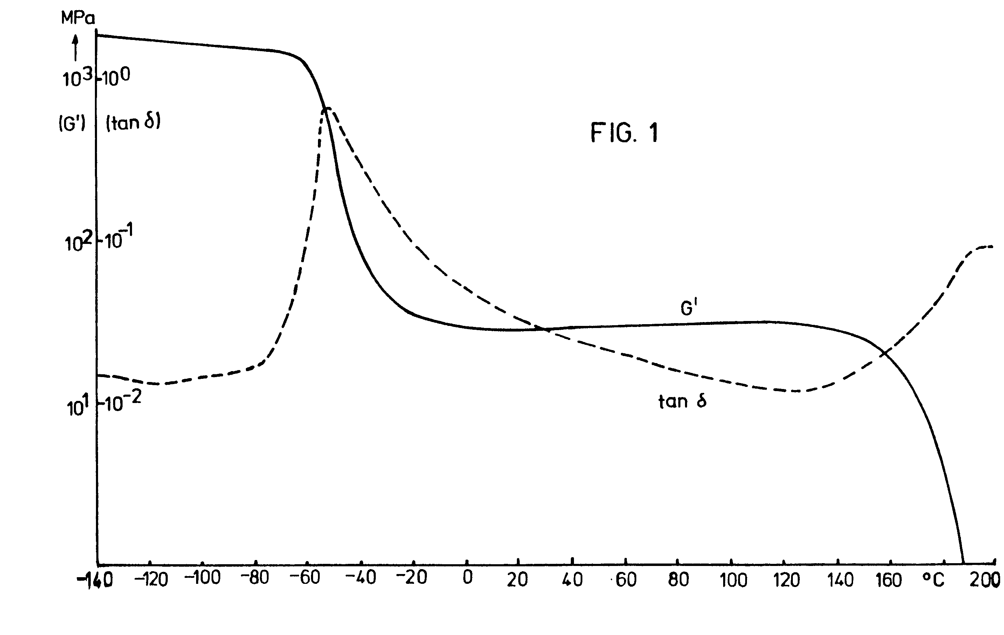

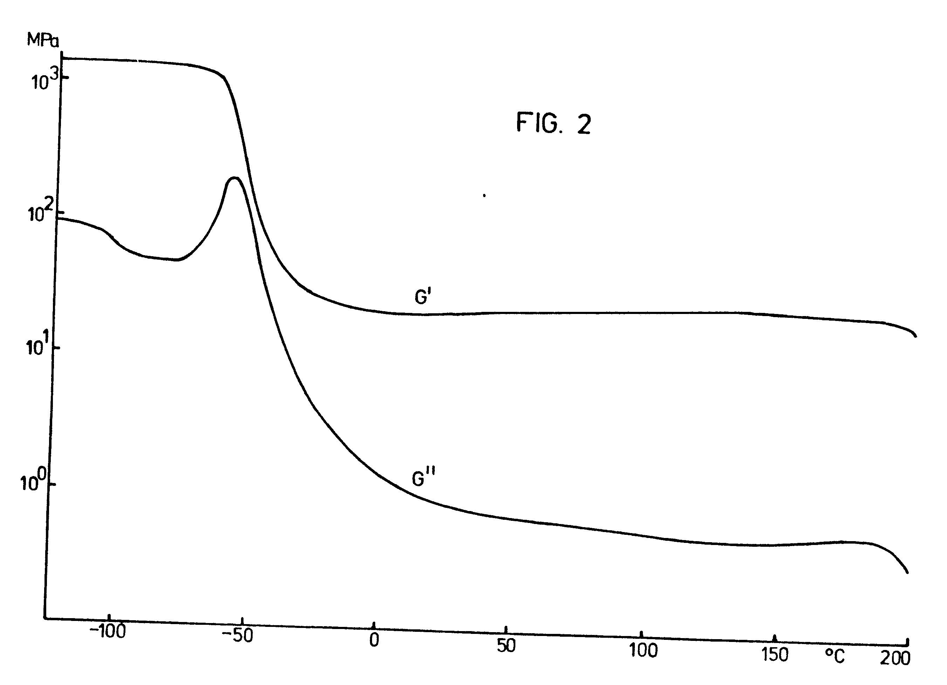

Besonders bemerkenswert sind die gemessenen Torsionsschwingungskurven (siehe Abbildungen 1 und 2 bei Beispiel 1). Sie geben Aufschluß über die Entmischung der Hartsegmentphase und der Weichsegmentphase. Die Diagramme deuten auf ein Gemisch mit vollständiger Phasentrennung hin, d.h. es liegt ein sehr breiter gummielastischer Zustandsbereich vor.

**Beispiel 1**

Herstellung von Elastomeren aus einem höhermolekularen Polyetherdiamin mit aromatischen Aminogruppen und verschiedenen festen Diisocyanaten.

Es werden Naphthalin-1,5-diisocyanat (NDI), dimeres Toluylen-2,4-diisocyanat (TT) oder das sogenannte Harnstoffdiisocyanat des 2,4-TDI, d.h. 3,3'-Diisocyanato-4,4'-dimethyl-N,N'-diphenylharnstoff (TDIH) verwendet.

**Herstellung des höhermolekularen, aromatischen Polyamins (Ausgangsmaterial)**

1 Mol eines linearen Polypropylenetherglykols der OH-Zahl 56 und 2 Mol Toluylen-2,4-diisocyanat werden durch 4-stündiges Erhitzen auf 80°C in ein NCO-Prepolymer (3,58 % NCO) überführt. 810 g des 45°C warmen NCO-Prepolymers werden unter intensivem Rühren so zu einer gekühlten Lösung von 52,2 g Kaliumhydroxid und 500 ml Wasser und 300 ml Aceton gegeben (NCO : $OH^{\ominus}$-Verhältnis = 1 : 1,35), daß eine Innentemperatur von 25°C nicht überschritten wird. 30 Minuten wird bei dieser Temperatur weitergerührt und dann 2 Stunden zum Rückfluß erhitzt. Nach 30-minütigem Stehen wird die untere, wäßrige Salzlösung aus dem zweiphasigen Reaktionsgemisch abgetrennt und verworfen. Die obere Phase wird bei 20 mbar/80°C und dann bei 1 mbar/100°C von Wasser- und Acetonresten befreit. Durch Absaugen des 60°C warmen Produkts über eine Drucknutsche (3 bar Überdruck) werden geringe Reste Salz abgetrennt und das Polyetheramin mit einer NH-Zahl von 48,4 isoliert.

## Erfindungsgemäße Umsetzung

100 Teile des höhermolekularen aromatischen Polyamins werden mit der entsprechenden Menge des feinteiligen Diisocyanates intensiv vermischt, sofort im Wasserstrahlvakuum entgast, in eine ca. 20 cm x 20 cm x 0,5 cm große, offene, kalte Form gegossen und in einem Heizschrank bei 120°C 4 Stunden ausgeheizt. Tabelle 1 zeigt die mechanischen Werte der erhaltenen Elastomeren und Abbildung 1 und Abbildung 2 die Torsionsschwingungskurven der Produkte B und C.

In der Abbildung 1 werden die Kurven des Schubmoduls (G') (zwischen 10 und 10 000 MPa) und der Dämpfung (tang δ) für Temperaturen zwischen -160 und +200°C aus dem Torsionsschwingungsversuch nach DIN 53 445 wiedergegeben. Die Probenlänge betrug 50,00 mm, die Probenbreite 8,00 mm und die Probendicke 1,48 mm. Rohdichte = 1070 kg/m.

In der Abbildung 2 werden die Kurven des Schubmoduls (G') und des Verlustmoduls (G"), in MPa, für Temperaturen zwischen -120 bis +200°C aus dem Torsionsschwingungsversuch wiedergegeben. Probengröße 4,00 mm x 6,00 mm; 1 Hz, Temp. Sweep. Str. 0,5 %.

Die Torsionsschwingungsversuche zeigen für den Schubmodul (G') zwischen -20° und +140°C (Abbildung 1) bzw. -20° und +185°C (Abbildung 2) einen ausgezeichnet parallelen Verlauf, was auf eine ideale Verteilung der Weich- und Hartsegmente im Elastomeren ohne gegenseitige Wechselwirkung hindeutet. Der Schubmodulverlauf G' ist sehr viel günstiger als bei Polyurethanen auf Basis höhermolekularer Polyole und Diol-Kettenverlängerungsmittel (vgl. Ullmanns Encyclopädie der technischen Chemie, Verlag Chemie, D 6940 Weinheim (1981), Band 19, Seite 331, Abbildung 33).

## Beispiel 2

Herstellung eines Elastomeren aus einem höhermolekularen Polyesterdiamin mit aromatischen Aminogruppen und TDIH.

## Herstellung des höhermolekularen Polyesteramins

Vorgelegt wird eine auf 90°C erhitzte Mischung aus 5550 ml Dimethylformamid, 925 ml Wasser und 370 ml Triethylamin. Unter intensivem Rühren werden 3,7 kg eines NCO-Prepolymeren des NCO-Gehaltes 3,4 % zugegeben, wobei heftige Gasentwicklung auftritt. Dieses NCO-Prepolymer wurde durch 3-stündiges Erhitzen eines Gemisches aus 2,4-Toluylendiisocyanat und einem Polyester der OH-Zahl 56, (aus Adipinsäure, Ethylenglykol und Butandiol-1,4 (1 : 1)), im NCO/OH-Äquivalentverhältnis von 2 : 1 hergestellt. Das Reaktionsgemisch wurde 10 Minuten nachgerührt und dann die flüchtigen Bestandteile, zuerst bei 80°C/18 mbar und dann bei 80°C/0,13 mbar, destilliert. Das verbleibende, hochviskose Produkt wies eine NH-Zahl von 34,45 (mgKOH/g) auf.

## Erfindungsgemäße Umsetzung

100 Teile des höhermolekularen Polyesterdiamins werden mit 17 Teilen TDIH (25,8 % NCO) intensiv vermischt. Die Verarbeitungszeit beträgt ca. 5 Minuten bei Raumtemperatur. Die Herstellung der Elastomerprüfplatte erfolgt wie in Beispiel 1. Ergebnisse siehe Tabelle 1.

## Beispiel 3

Herstellung eines Polyharnstoff(urethan)-Elastomers aus einem hochmolekularen aromatischen Diamin, einem niedermolekularen aromatischen Diamin-Kettenverlängerer und dimerem Toluylendiisocyanat (TT).

In ein Gemisch aus

100 Teilen eines aromatischen Aminopolyethers gemäß Beispiel 1 und

10 Teilen eines Gemisches aus 65 % 3,5-Diethyltoluylen-diamin-2,4 und 35 % 3,5-Diethyltoluylen-diamin-2,6

werden

36 Teilen TT (NCO/NH$_2$-Verhältnis 1,1 : 1) eingerührt. Die Dispersion wird kurz im Ölpumpenvakuum unter Rühren entgast und nach Beispiel 1 zu einer Probeplatte (mechan. Werte siehe Tabelle 1) verarbeitet.

**Tabelle 1**

|  | Beispiel Nr. | | | | |
|---|---|---|---|---|---|
|  | 1 | 1 | 1 | 2 | 3 |
| Versuch | A | B | C | - | - |
| Diisocyanat | NDI | TT (Abb.1) | TDIH (Abb.2) | TDIH | TT |
| Menge | 12 g | 16,6 g | 17,6 g |  |  |
| (NCO : NH$_2$)-Verhältnis | 1,32 | 1,10 | 1,25 |  | 1,10 |
| Topfzeit (Gießzeit) (min) | 5 (25°C) 8 (14°C) | 30 (25°C) | 30 (25°C) | 5 |  |
| 100 % Modul [1] (MPa) | 7,8 | 11,4 | 11,8 | 11,3 |  |
| Reißfestigkeit [1] (MPa) | 10,8 | 18 | 16,3 | 38,5 | 20,0 |
| Reißdehnung [1] (%) | 350 | 700 | 400 | 550 | 300 |
| Weiterreißfestigkeit [2] (kN/m) | 42 | 46 | 40,2 | 68,5 | 68 |
| Oberflächenhärte (Shore A) [3] | 92 | 94 | 92 | 92 | - |
| Oberflächenhärte (Shore D) | 39 | 39 | 40 | 40 | 58 |
| Elastizität [4] (%) | 50 | 58 | 51 | 48 | 50 |

[1] Zugversuch nach DIN 53 504
[2] DIN 53 515
[3] DIN 53 505
[4] DIN 53 512

**Beispiel 4**

Vergleichsversuch: Umsetzung eines difunktionellen Hydroxyl-Polyethers mit festen Diisocyanaten

100 Teile eines difunktionellen Hydroxyl-Polyethers der OH-Zahl 56, Molekulargewicht 2000, der durch Addition von Propylenoxid an Propandiol-1,2 hergestellt wurde, werden mit der angegebenen Menge des jeweiligen Diisocyanates intensiv vermischt und anschließend ca. 5 Minuten im Ölpumpenvakuum unter Rühren entgast.

Tabelle 2 zeigt die erhaltenen Ergebnisse.

Die Mischungen führen auch nach längerem Ausheizen nicht zu Elastomeren mit guten Eigenschaften, sondern nur zu weichen Massen.

**Tabelle 2**

| Versuch | Diisocyanat | Menge | Aussehen nach | |
|---|---|---|---|---|
|  |  |  | 4h/120°C | 16h/120°C |
| A | NDI | 11,50 | flüssig | pastös |
| B | TT | 19,10 | flüssig | pastös |
| C | TDIH | 17,90 | flüssig | klebriger, nicht-elastischer Formkörper |

**Patentansprüche**

1. Verfahren zur Herstellung von Polyharnstoff-Elastomeren, dadurch gekennzeichnet, daß man aromatische Polyamine mit Molekulargewichten von 400 bis 8000, sowie gegebenenfalls 0,05 bis 5,0 Mol pro Mol dieser höhermolekularen Polyamine an aromatischen Diaminen mit Molekulargewichten von 100 bis 399, in einem NCO/NH$_2$-Äquivalentverhältnis zwischen 1 : 1 und 1,5 : 1 mit niedermolekularen, festen feinteiligen Diisocyanaten mit Schmelzpunkten > 40°C und einer mittleren Teilchengröße von $\leqslant$ 200 μm versetzt und diese

Mischung nach Eingießen in Formen ausheizt, wobei feinteilige Diisocyanate ausgenommen sind, die eine durch Reaktion von 0,1 bis 25 % ihrer NCO-Gruppen mit aliphatisch gebundene primäre und/oder sekundäre Aminogruppen und/oder Hydrazidgruppen aufweisenden Verbindungen und/oder Hydrazin(en) gebildete Polyadduktumhüllung aufweisen.

2. Verfahren nach Anspruch 1, dadurch gekennzeichnet, daß man aromatische Polyamine mit Molekulargewichten von 600 bis 4000 einsetzt.

3. Verfahren nach Ansprüchen 1 und 2, dadurch gekennzeichnet, daß man aromatische Diamine mit Molekulargewichten von 600 bis 4000 einsetzt, die durch Alkali-Hydrolyse von NCO-Prepolymeren aus Polyether- und/oder Polyesterdiolen und überschüssigen Mengen an aromatischen Diisocyanaten, insbesondere Toluylen-2,4-diisocyanat, hergestellt werden.

4. Verfahren nach Ansprüchen 1 bis 3, dadurch gekennzeichnet, daß man aromatische Diamine mit Molekulargewichten von 100 - 399, in Mengen von 0,05 bis 5,0 Mol pro Mol höhermolekulare Polyamine, mitverwendet.

5. Verfahren nach Ansprüchen 1 bis 4, dadurch gekennzeichnet, daß man als feste, feinteilige Diisocyanate aromatische Diisocyanate mit Schmelzpunkten > 80°C und symmetrischem, starrem Molekülaufbau verwendet.

6. Verfahren nach Anspruch 5, dadurch gekennzeichnet, daß man als aromatische Diisocyanate 1,5-Naphthalin-diisocyanat, 3,3'-Diisocyanato-4,4'-dimethyl-N,N'-diphenylharnstoff, dimeres 1-Methyl-2,4-diisocyanatobenzol, dimeres 4,4'-Diisocyanato-diphenylmethan oder 3,3'-Dimethyl-4,4'-(bzw. 2,2'-)diisocyanato-diphenyl verwendet.

7. Verfahren nach Ansprüchen 1 bis 6, dadurch gekennzeichnet, daß das Verhältnis von NCO-Äquivalenten aus dem feinteiligen, festen Diisocyanat zu den $NH_2$-Äquivalenten aus den Di- und Polyaminen 1 : 1 bis 1,35 : 1 beträgt.

8. Verfahren nach Ansprüchen 1 bis 7, dadurch gekennzeichnet, daß die feinteiligen Diisocyanate eine mittlere Teilchengröße von 1 bis 200 μm aufweisen.

9. Verfahren nach Ansprüchen 1 bis 8, dadurch gekennzeichnet, daß die Mischung in der Form bei Temperaturen von 100 bis 200°C verzugsweise 100 bis 160°C, ausgeheizt wird.

10. Polyharnstoffelastomere, erhältlich nach den Verfahren der Ansprüche 1 bis 9.

## Revendications

1. Procédé de production d'élastomères du type polyurée, caractérisé en ce qu'on ajoute des diisocyanates solides de bas poids moléculaire, finement divisés, ayant des points de fusion supérieurs à 40°C et un diamètre moyen des particules inférieur ou égal à 200 μm, a des polyamines aromatiques de poids moléculaires compris entre 400 et 8000 ainsi que, le cas échéant, 0,05 à 5,0 moles, par mole de ces polyamines de poids moléculaire élevé, de diamines aromatiques ayant des poids moléculaires de 100 à 399, dans un rapport des équivalents $NCO/NH_2$ compris entre 1 : 1 et 1,5 : 1 et on chauffe ce mélange après l'avoir coulé dans des moules, en excluant des diisocyanates finement divisés qui présentent une enveloppe de produit de polyaddition formée par réaction de 0,1 à 25 % de leurs groupes NCO avec des composés portant des groupes amino primaires et/ou secondaires en liaison aliphatique et/ou des groupes hydrazide et/ou une ou plusieurs hydrazines.

2. Procédé suivant la revendication 1, caractérisé en ce qu'on utilise des polyamines aromatiques ayant des poids moléculaires de 600 a 4000.

3. Procédé suivant les revendications 1 et 2, caractérisé en ce qu'on utilise des diamines aromatiques ayant des poids moléculaires de 600 à 4000, qui sont préparées par hydrolyse alcaline de NCO-prépolymères dérivés de polyéther- et/ou de polyesterdiols et de quantités en excès de diisocyanates aromatiques, notamment de 2,4-diisocyanatotoluène.

4. Procédé suivant les revendications 1 à 3, caractérisé en ce qu'on utilise en même temps des diamines aromatiques ayant des poids moléculaires de 100 à 399 en quantités de 0,05 à 5,0 moles par mole de polyamines de poids moléculaire élevé.

5. Procédé suivant les revendications 1 à 4, caractérisé en ce qu'on utilise, comme diisocyanates solides finement divisés, des diisocyanates aromatiques ayant des points de fusion supérieurs à 80°C et une structure moléculaire symétrique rigide.

6. Procédé suivant la revendication 5, caractérisé en ce qu'on utilise comme diisocyanates aromatiques le 1,5-diisocyanatonaphtalène, la 3,3'-diisocyanato-4,4'-diméthyl-N,N'-diphénylurée, le 1-méthyl-2,4-diisocyanatobenzène dimère, le 4,4'-diisocyanatodi-phénylméthane dimère ou le 3,3'-diméthyl-4,4'-(ou 2,2'-)diisocyanatodiphényle.

7. Procédé suivant les revendications 1 à 6, caractérisé en ce que le rapport des équivalents de NCO provenant du diisocyanate solide finement divisé aux équivalents de $NH_2$ provenant des diamines et des polyamines a une valeur de 1 : 1 à 1,35 : 1.

8. Procédé suivant les revendications 1 à 7, caractérisé en ce que les diisocyanates finement divisés ont un diamètre moyen de particules de 1 à 200 μm.

9. Procédé suivant les revendications 1 à 8, caractérisé en ce que le mélange dans le moule est chauffé à des températures de 100 à 200°C, de préférence de 100 à 160°C.

10. Des élastomères du type polyurée pouvant être obtenus par les procédés selon les revendications 1 à 9.

**Claims**

1. A process for the production of polyurea elastomers, characterized in that low molecular weight, solid, finely divided diisocyanates having melting points of > 40°C and having an average particle size of ⩽ 200 μm are added to aromatic polyamines having molecular weights in the range from 400 to 8000 and, optionally, 0.05 to 5.0 mol - per mol of these relatively high molecular weight polyamines - of aromatic diamines having molecular weights of from 100 to 399 in an NCO/NH$_2$ equivalent ratio of from 1 : 1 to 1.5 : 1 and the resulting mixture is thoroughly heated after pouring into moulds, diisocyanates which have a polyadduct coating formed by reaction of 0.1 to 25 % of their NCO groups with compounds containing aliphatically bound primary and/or secondary amino groups and/or hydrazide groups and/or hydrazines being excluded.

2. A process as claimed in claim 1, characterized in that aromatic polyamines having molecular weights of from 600 to 4000 are used.

3. A process as claimed in claims 1 and 2, characterized in that aromatic diamines having molecular weights of from 600 to 4000, obtained by alkali hydrolysis of NCO prepolymers of polyether and/or polyester diols and excess quantities of aromatic diisocyanates, particularly tolylene-2,4-diisocyanate, are used.

4. A process as claimed in claims 1 to 3, characterized in that aromatic diamines having molecular weights of from 100 to 399 are co-used in quantities of from 0.05 to 5.0 mol per mol relatively high molecular weight polyamines.

5. A process as claimed in claims 1 to 4, characterized in that aromatic diisocyanates having melting points of > 80°C and a symmetrical, rigid molecular structure are used as the solid, finely divided diisocyanates.

6. A process as claimed in claim 5, characterized in that 1,5-naphthalene diisocyanate, 3,3'-diisocyanato-4,4'-dimethyl-N,N'-diphenyl urea, dimeric 1-methyl-2,4-diisocyanatobenzene, dimeric 4,4'-diisocyanatodiphenylmethane or 3, 3'-dimethyl-4, 4'-(or 2, 2'-)diiso-cyanatodiphenyl is used as the aromatic diisocyanate.

7. A process as claimed in claims 1 to 6, characterized in that the ratio of NCO-equivalents from the finely divided, solid diisocyanate to the NH$_2$ equivalents from the di- and polyamines is from 1 : 1 to 1.35 : 1.

8. A process as claimed in claims 1 to 7, characterized in that the finely divided diisocyanates have an average particle size of 1 to 200 μm.

9. A process as claimed in claims 1 to 8, characterized in that the mixture is thoroughly heated in the mould at temperatures of 100 to 200°C and preferably at temperatures of 100 to 160°C.

10. Polyurea elastomers obtainable by the process claimed in claims 1 to 9.

FIG. 1

EP 0 150 789 B1

FIG. 2

EP 0 150 789 B1